# EUROPEAN PATENT SPECIFICATION

(11) **EP 2 090 988 B1**
(45) Date of publication and mention of the grant of the patent: **24.11.2010**
(21) Application number: 08425086.9
(22) Date of filing: 12.02.2008
(51) Int. Cl.: G06F 13/38, G06F 3/06

(54) **Communication system using an USB-type communication channel and corresponding communication method**
Einen USB-Kommunikationskanal verwendendes Kommunikationssystem und entsprechendes Kommunikationsverfahren
Système de communication utilisant un canal de communication de type USB et procédé de communication correspondant

(43) Date of publication of application: 19.08.2009
(73) Proprietor: Magneti Marelli S.p.A., 20011 Corbetta (MI) (IT)
(72) Inventor: Mortara, Piero, 10078 Venaria Reale (Torino) (IT)
(74) Representative: Notaro, Giancarlo

(56) References cited:
- WO-A-2005/043333
- US-A1- 2005 138 288

## Description

The present invention concerns a communication system employing a USB-type communication channel between at least one first host device and a second peripheral device of the Mass Storage Device type, said first host device including a USB interface operating in master mode and said second peripheral device including a USB interface operating in slave mode.

In the USB protocol, communication occurs through point-point type connections between a host device and a function or peripheral device. For a complete treatment of the meaning of such expressions and of the USB protocol, see the USB 2.0 specifications (Universal Serial Bus Specification, Compaq Hewlett-Packard Intel Lucent Microsoft NEC Philips, Revision 2.0, April 27, 2000).

The USB Mass Storage Device class (USB MSC) is a set of communication protocols defined by the USB Implementers Forum operating on the Universal Serial Bus. The standard provides an interface for a great variety of mass memory devices, external hard disks, external optical CD and DVD drives, flash memory devices, digital cameras, memory card readers, digital audio players, game systems, palm computers, mobile phones and other devices.

Devices supporting such standard are identified as MSC (Mass Storage Class) devices, or, at times, also as UMS (Universal Mass Storage).

US 2005/0138288 discloses an Express Card^{™} connector for connecting to an USB and a PCI Express serial interface.

In this field, according to the USB standard a peripheral type USB unit can not autonomously undertake the transfer of data without an explicit request from the host device.

Therefore, a specific technical problem arises relative to the control of high speed data transmission between two devices on a USB channel in the case in which the only available management possibility on the first device is host mode, with the corresponding USB interface operating as master' to command the data transmission of a Mass Storage Device type access profile.

Furthermore, such limit does not allow the development of specific USB peripheral drivers and thus the extension of management modes according to the specific needs.

The present invention has the object of obtaining a communication system solution employing a USB type communication channel between at least one first host device and a second Mass Storage Device-type peripheral device, the first host device including a USB interface operating in master mode and the second peripheral device including a USB interface operating in slave mode, allowing the control of high speed data transmission of a Mass Storage Device type access profile between the two devices on a USB channel in the case in which the only management possibility on the first device is in host mode.

An further object of the present invention is to provide a communication system solution allowing the development of specific USB peripheral drivers thus extending its management mode according to specific needs.

According to the present invention, such object is achieved by means of a communication system, as well as by a corresponding communication method having the characteristics specifically recalled in the following claims. The invention will now be described, by way of example only, with reference to the annexed drawings wherein:
- figure 1 schematically represents a communication system according to the invention;
- figure 2 schematically represents the communication system according to the invention in a first operation configuration;
- figure 3 schematically represents the communication system according to the invention in a second operation configuration;
- figure 4 represents a flow diagram illustrating the first operation configuration;
- figure 5 represents a flow diagram illustrating the second operation configuration.

In brief, according to the invention a communication system is provided that is equipped with a second communication channel, preferable but not limited to the CAN (Controller Area Network, also know as CAN-Bus) type, to perform the control of high speed data transmission between two devices on a USB channel. Such second communication channel allows extension of the USB management modes, such second channel being available and completely manageable from a hardware and software point of view on both devices.

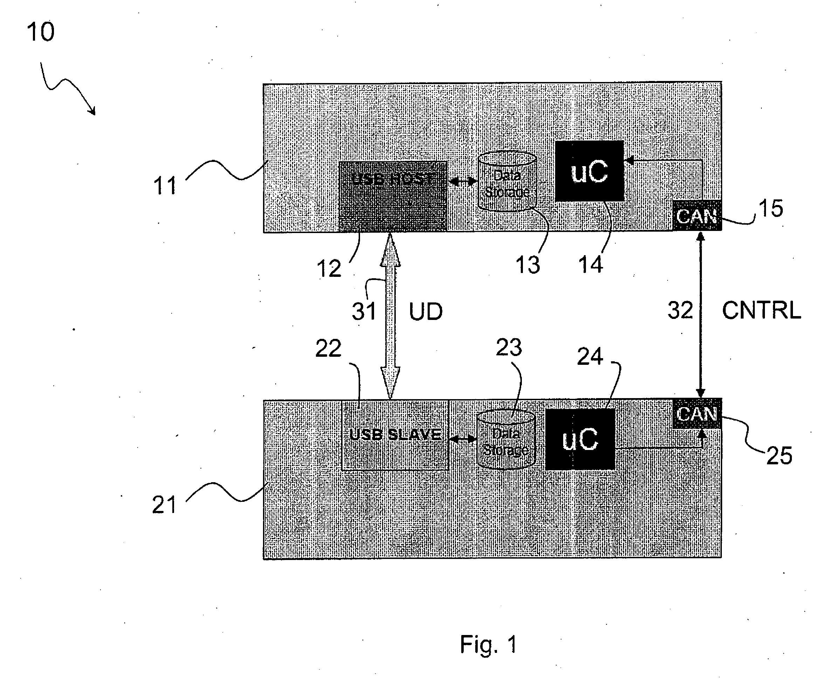

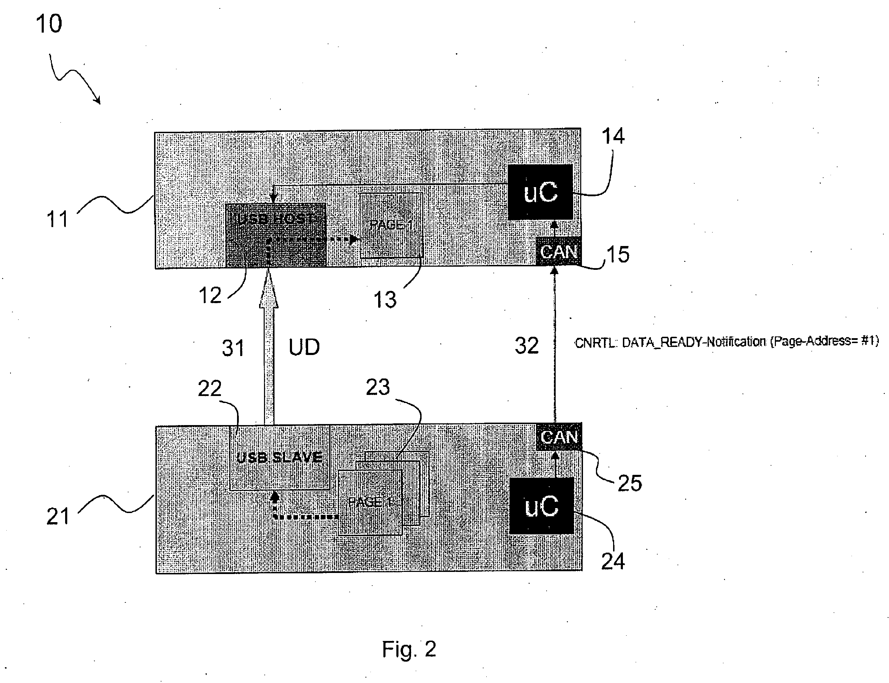

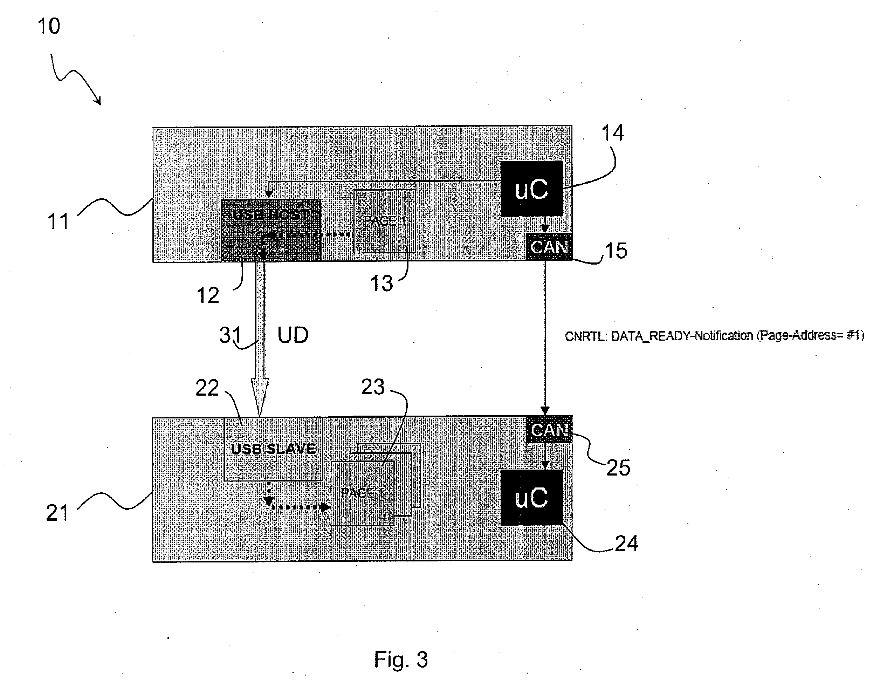

Figure 1 represents an example of a communication system according to the invention, indicated as a whole with the numeric reference 10, wherein 11 indicates a host device, equipped with a USB host interface 12, operating in master mode. The host device 11 includes a memory module 13 accessible for reading/writing operations through such host USB interface 12. The host device 11 includes a microprocessor 14, which, as is better visible in figures 2 and 3, controls the host interface 12 and in addition is associated with a first CAN communication interface 15 for the exchange of signals and control.

Furthermore, a peripheral device 21 is provided, equipped with a slave USB interface 22, that is, a peripheral type interface behaving in a subordinate manner with respect to the host USB interface 12 with which it communicates, exchanging USB data UD through a first USB communication channel 31. The peripheral device 21 in turn includes a mass storage memory 23, accessible for reading/writing operations through such slave USB interface 22. Therefore, in this case, the host device 11 has only the possibility of managing the first USB communication channel 31 for Mass Storage Device-type accesses to the peripheral device 21 in host mode, in particular for data access and exchange between the memory module 13 and the mass storage memory 23, that is, between the data storages.

In addition, the peripheral device 21 is in turn equipped with a corresponding microprocessor 24 associated with a respective second CAN communication interface 25 for the exchange of signals and control, through which it can exchange control signals CNTRL on a second CAN communication channel 32 established between the CAN communication interfaces 15 and 25.

The control signals CNTRL according to the invention carry a specific control application protocol allowing both the host 11 and peripheral 21 devices to assume, depending on the need, the role of master or slave device in communication on the first USB communication channel 31.

Figure 2, shows a communication system 10 in a first operation configuration, relative to a reading operation of the content of the memory 23 of the peripheral device 21 by the host device 11. Keeping constant the management protocol of the first USB Mass Storage Device-type communication channel 31, which provides for the host device 11 assuming the role of master limited to data transfer the relationship between the USB 12 and 22 interfaces, the communication system 10, considering together the first communication channel 31 and the second CAN communication channel 32, operates so that it is the peripheral device 21 that actually assumes the role of master device, actual manager and initiator of communication between the devices 11 and 21. This occurs through the exchange of control signals CNTRL on the second CAN communication channel 32, and more precisely, the control signals CNTRL sent by the microcontroller 24 of the peripheral device 21 announcing to the host device 11, that is, to its microcontroller 14, the availability of a page #1 of data for reading in the mass storage memory 23 of the peripheral device 12. Then the microcontroller 14 of the host device 11 commands the host device 11 to read and transfer the USB data UD from the peripheral device 21 on the basis of the address contained in the control message CNTRL itself. The control message CNTRL sent by the second peripheral device 12 is shown in figure 2 and is written herein as a pseudo code example:

CNRTL: DATA_READY-Notification USB DATA (Page-Address = #1), wherein DATA_READY indicates the availability of data for access by the host device 11 and Page-Address = #1 indicates the page address specifically available for access in the mass storage memory 23.

In this way, it is possible, for example, to transfer a stream of data, audio or video from the peripheral device 21 to the host device 11, synchronised by the second communication channel 32, that is, the CAN type control channel, using all of the transfer band made available by the first USB communication channel 31.

Figure 3 shows an operation configuration of the system 10 in which the host device 11 operates as master for the transfer of data in a writing operation on the mass storage memory 23 of the peripheral device 21, sending a control message CNTRL on the second CAN communication channel 32 from its microprocessor 14 announcing to the peripheral device 21 the sending and availability of the page of data #1. Analogously, as before, it is possible to transfer a stream of data, audio or video from the host device 11 to the peripheral device 21, synchronised by the second CAN control channel 32, using the entire transfer band made available by the first USB channel 31.

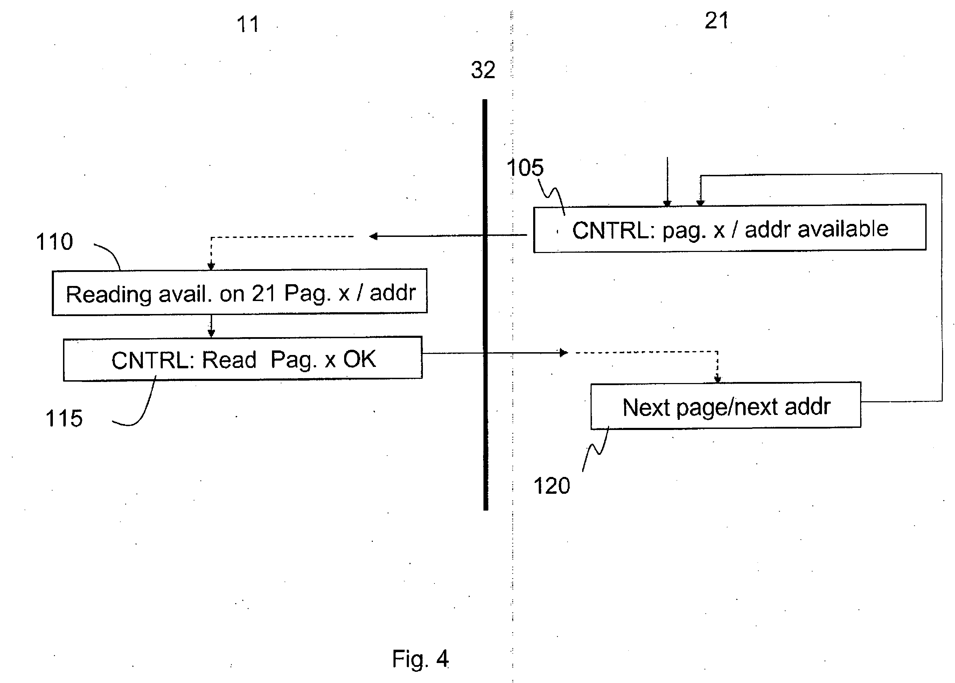

Figure 4 shows a flow diagram exemplifying the operation configuration illustrated with reference to Figure 2, wherein the peripheral device 21 operates as master for transfer control.

In a transfer initialisation step 105 the peripheral device 21 sends a control signal CNTRL, exemplified with the pseudo code CNTRL: Pag. x available / addr, to the microprocessor 24 on the second CAN communication channel 32, signalling to the microprocessor 14 of the host device 11 the availability for reading access of a memory area, that is, of the #x page, or of the memory location defined by the address addr, in the mass storage memory 23. The host device 11 under the control of its own microprocessor 14 receiving such control signal CNTRL from the peripheral device 21, then in step 110 performs the reading of the page #x, transferring the USB data UD through the first USB communication channel 31. Then in a confirmation step 115, the microcontroller 14 provides a control signal CNTRL (e.g.. CNTRL: Pag. Read x OK) on the second CAN communication channel 32, confirming that the page was read.

In step 120 the peripheral device 21 increments ("next" type of instruction) a pointer to the memory area, moving to the next page (Next page) or address (Next addr) in the mass storage memory 23 to be read, returning control to the initialisation step 105.

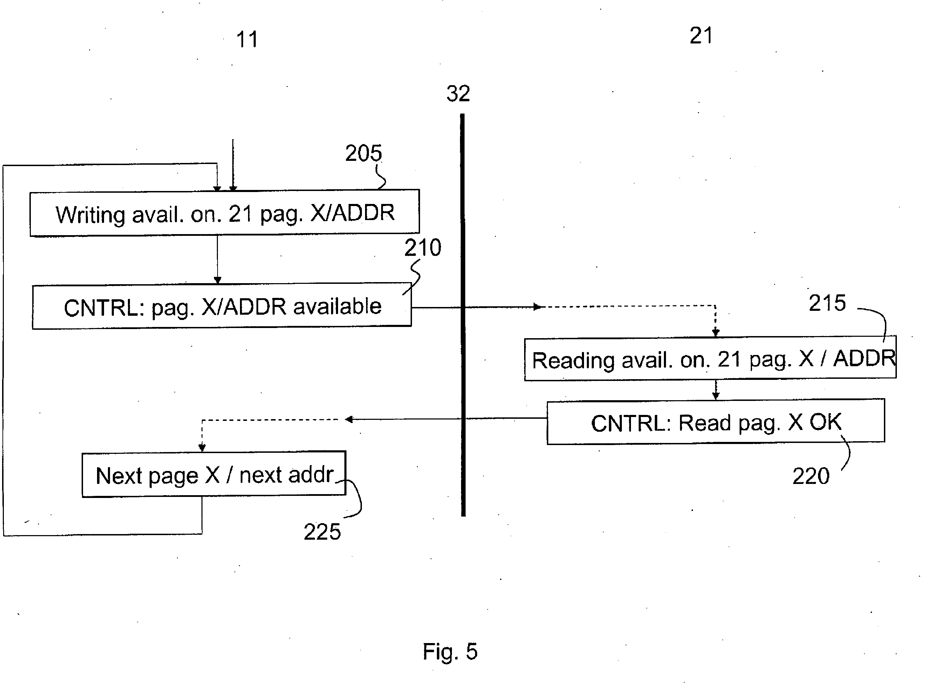

Figure 5 shows a flow diagram exemplifying the operation configuration illustrated with reference to the scheme in figure 3, wherein the host device 11 operates as master for control of the transfer.

In an initialisation step 205 the host device 11 commands a writing operation of its own page or address x on the peripheral device 21 in the mass storage memory 23. In step 210 the host device 11 announces to the peripheral device 21, by sending of a corresponding control signal CNTRL (CNTRL: Pag. X / ADDR available) on the second CAN communication channel 32, the sending and availability of the page X or address ADDR of data to be written. In a reading step 215 the peripheral device 21 provides for the reading of such page X or address ADDR of data, which is then stored in the mass storage memory 23. In step 220 the peripheral device 21 sends a control signal CNTRL (CNTRL: Pag. Read X OK) on the second CAN communication channel 32 to the host device 11 to signal that page X was read. In step 225 the host device 11 provides for the incrementing ("next" type instruction) of the page number X of the address ADDR signalling the memory area to be written and the control returns to the initialisation step 205.

The proposed solution advantageously allows the control of high-speed data transmission of a Mass Storage Device-type access profile between two devices on a USB channel in the case in which the only available management possibility on the first device is in host mode. In providing a second serial communication channel for sending the data transfer control signals, the proposed solution advantageously allows both the choice of which of the two devices actually behaves as master or slave in the complex of the communication system to command the data transfer, and the assigning to the USB channel the sole task of data transfer, without wasting band by sending additional control signal on the same channel.

A particularly advantageous aspect of the proposed solution is constituted by the adoption of a CAN-bus channel for the second communication channel controlling the USB channel owing to both the possibility of finding in a device, particularly in automotive applications, such interface already predisposed for other purposes or in any case, available in the warehouse of an automotive company, and the particular resistance to electromagnetic disturbances typical of such a serial type channel. The adoption of a CAN-type interface for the realisation of the second control channel is particularly advantageous in automotive-type applications wherein at least the first host device is usually already equipped with a CAN interface to communicate with sensors, indicators and control units of the auto vehicle using the CAN-bus for signal distribution and exchange.

According to a preferred embodiment, the first host device in this case can be the device developed by the Applicant called Blue&Me, that is, an "infotainment" system for auto vehicles, including an electronic device installed on the vehicle, equipped with a Bluetooth interface for hands free telecommunications, but also provided with LS CAN and USB connections, in addition to the possibility of voice recognition, Text To Speech conversion, MP3/WMA audio streaming and possibly GPS receivers with relative navigation systems.

Such Blue&Me device, having to operate, for example, for MP3 audio streaming, is provided with a host-type USB interface, as well as, as was said, with a CAN-type interface. The above-described communication system and method provides a peripheral device comprising an additional plug-in device provided through the USB connection, also having a CAN interface and a corresponding connector to realise the second serial communication channel. Such plug-in device is generally a mass memory device which may contain audio, video or data in different formats, such as MPR music or navigation maps.

Naturally, without prejudice to the underlying principles of the invention, the details and the embodiments may vary widely with respect to what has been described and illustrated by way of example only without departing from the scope of the present invention.

According to a possible alternative embodiment a Bluetooth connection can be employed in place of the CAN-Bus connection for the realisation of the second control communication channel of the USB channel.

## Claims

1. A communication system employing a USB-type communication channel (31) between at least one first host device (11) and a second Mass Storage Device-type peripheral device (21), said first host device (11) including a USB interface (12) operating in master mode and said second peripheral device (21) including a USB interface (22) operating in slave mode,
said first host device (11) and said second peripheral device (21) include respective second serial interfaces (15, 25) adapted to mutually interacting to establish between said first host device (11) and said second peripheral device (21) a second serial communication channel (32) for exchanging control signals (CNTRL), **characterised in that** said control signals are able to control Mass Storage Device-type access operations on said first USB communication channel (31).

2. A system according to claim 1, **characterised in that** said first host device (11) includes a memory module (13) and said second peripheral device (21) includes a mass storage memory module (23) and **in that** said Mass Storage Device-type access operations include data access and data exchange between said memory module (13) and said mass storage memory (23).

3. A system according to claim 1 or 2, **characterised in that** said control (CNTRL) signals adapted to controlling a Mass Storage Device-type access on the first USB communication channel (31) include commands (105, 210) adapted to conferring the management and initialisation of the access operations on said first USB communication channel (31) to said first host device (11) or to said second peripheral device (21).

4. A system according to claim 1 or 2 or 3, **characterised in that** said second serial interfaces (15, 25) able to establish a second serial communication channel between the first host device (11) and said second peripheral device (21) are CAN (Controller Area Network) interfaces and said second communication channel (32) is a CAN BUS-type of channel.

5. A system according to claim 1 or 2 or 3, **characterised in that** said second serial interfaces (31, 32) able to establish a second serial communication channel between the first device (11) and said second device (21) are Bluetooth interfaces.

6. A system according to one or more of the previous claims, **characterised in that** said first host device (11) is placed on an auto vehicle.

7. A system according to the claim 6, **characterised in that** said serial interface (15) of said first host device (11) is a CAN interface for communicating with additional devices of said auto vehicle.

8. A communication method including opening a first USB communication channel (31) between a first host device (11) and a second peripheral device (12) for Mass Storage Device-type USB access operations, said first host device (11) operating in master mode with respect to said first USB communication channel (31) and said second peripheral device (12) operating in slave mode,
**characterised in that** it also includes the operations of
establishing a second serial communication channel (32) between said first host device (11) and said second peripheral device (21) to exchange control signals (CNTRL) able to control said Mass Storage Device-type USB access operations on said first USB communication channel (31).

9. A method according to claim 8, **characterised by** establishing a second serial communication channel (32) of CAN (Controller Area Network) type.

10. A method according to claim 8, **characterised by** establishing a second Bluetooth serial communication channel (32).

11. A method according to claim 8 or 9 or 10, **characterised in that** said control (CNTRL) signals exchange operation able to control Mass Storage Device-type USB access operations on the first USB communication channel (31) includes conferring the management and initialisation of the access operations on said first USB communication channel (31) to said first host device (11) or to said second peripheral device (21) by sending control commands (105; 210) on said second serial communication channel (32).

12. A method according to any of the claims 8 to 11, **characterised in that** it includes conferring the management and initialisation of the access operations to the second peripheral device (21) for the control of the USB (UD) data transfer, through the steps of:
commanding (105) a reading operation of the mass storage (23) of said second peripheral device (21) by sending a control (CNTRL) signal from the second peripheral device (21) to the first host device (11) on the second serial communication channel (32), signalling the availability for reading of a memory area (x, addr) in the second peripheral device (21);
performing by said first host device (11) a reading operation of said memory area, transferring the (UD) data through the first USB communication channel (31);
confirming (115) by said first host device (11) on the second communication channel (32) the reading of said memory area (x, addr).

13. A method according to any of the claims from 8 to 11, **characterised in that** it includes conferring the management and initialisation of access operations to the first host device (11) for transfer control, through the steps of:
commanding (205) a writing operation by the first device (11) on the second peripheral device (21) of a memory area (X, ADDR) in the second device (21) by signalling (210) on the second communication channel (32) by the first host device (11) to the second peripheral device (21) the availability of said memory area (X, ADDR) by sending a control (CNTRL) signal;
reading (215) on said first communication channel (31) by said second peripheral device (21) said memory area (X, ADDR) and storing in said second peripheral device (21),
signalling (220) through the sending by the second device (21) to the first device (11) of a control (CNTRL) signal on the second communication channel (32).

14. A method according to any of the claims from 8 to 13, **characterised in that** it includes providing said first host device (11) installed in an auto vehicle and configuring said second peripheral device (21) as a plug-in device including a USB interface (22) and a serial interface (25).

## Patentansprüche

1. Kommunikationssystem, das einen Kommunikationskanal (31) des USB-Typs zwischen wenigstens einer ersten Host-Vorrichtung (11) und einer zweiten Peripherievorrichtung (21) des Massenspeichervorrichtungstyps verwendet, wobei die erste Host-Vorrichtung (11) eine USB-Schnittstelle (12), die in einer Master-Betriebsart arbeitet, enthält und die zweite Peripherievorrichtung (21) eine USB-Schnittstelle (22), die in einer Slave-Betriebsart arbeitet, enthält,
wobei die erste Host-Vorrichtung (11) und die zweite Peripherievorrichtung (21) jeweilige zweite serielle Schnittstellen (15, 25) enthalten, die dazu ausgelegt sind, gegenseitig in Wechselwirkung zu treten, um zwischen der ersten Host-Vorrichtung (11) und der zweiten Peripherievorrichtung (21) einen zweiten seriellen Kommunikationskanal (32) für den Austausch von Steuersignalen (CNTRL) aufzubauen, **dadurch gekennzeichnet, dass** die Steuersignale dazu ausgelegt sind, Zugriffsoperationen des Massenspeichervorrichtungstyps auf den ersten USB-Kommunikationskanal (31) zu steuern.

2. System nach Anspruch 1, **dadurch gekennzeichnet, dass** die erste Host-Vorrichtung (11) ein Speichermodul (13) enthält und die zweite Peripherievorrichtung (21) ein Massenspeichermodul (23) enthält und dass Zugriffsoperationen des Massenspeichervorrichtungstyps einen Datenzugriff und einen Datenaustausch zwischen dem Speichermodul (13) und dem Massenspeicher (23) enthalten.

3. System nach Anspruch 1 oder 2, **dadurch gekennzeichnet, dass** die Steuersignale (CNTRL), die einen Zugriff des Massenspeichervorrichtungstyps auf den ersten USB-Kommunikationskanal (31) steuern können, Befehle (105, 210) enthalten, die dazu ausgelegt sind, das Management und die Initialisierung der Zugriffsoperationen auf den ersten USB-Kommunikationskanal (31) an die erste Host-Vorrichtung (11) oder an die zweite Peripherievorrichtung (21) zu übertragen.

4. System nach Anspruch 1 oder 2 oder 3, **dadurch gekennzeichnet, dass** die zweiten seriellen Schnittstellen (15, 16), die dazu ausgelegt sind, einen zweiten seriellen Kommunikationskanal zwischen der ersten Host-Vorrichtung (11) und der zweiten Peripherievorrichtung (21) herzustellen, CAN-Schnittstellen (Controller Area Network-Schnittstellen) sind und der zweite Kommunikationskanal (32) ein Kanal des CAN BUS-Typs ist.

5. System nach Anspruch 1 oder 2 oder 3, **dadurch gekennzeichnet, dass** die zweiten seriellen Schnittstellen (31, 32), die einen zweiten seriellen Kommunikationskanal zwischen der ersten Vorrichtung (11) und der zweiten Vorrichtung (21) herstellen können, Bluetooth-Schnittstellen sind.

6. System nach einem oder mehreren der vorhergehenden Ansprüche, **dadurch gekennzeichnet, dass** die erste Host-Vorrichtung (11) in einem Kraftfahrzeug angeordnet ist.

7. System nach Anspruch 6, **dadurch gekennzeichnet, dass** die serielle Schnittstelle (15) der ersten Host-Vorrichtung (11) eine CAN-Schnittstelle für die Kommunikation mit zusätzlichen Vorrichtungen des Kraftfahrzeugs ist.

8. Kommunikationsverfahren, das das Öffnen eines ersten USB-Kommunikationskanals (31) zwischen einer ersten Host-Vorrichtung (11) und einer zweiten Peripherievorrichtung (12) für USB-Zugriffsoperationen des Massenspeichervorrichtungstyps umfasst, wobei die erste Host-Vorrichtung (11) in einer Master-Betriebsart in Bezug auf den ersten USB-Kommunikationskanal (31) arbeitet und die zweite Peripherievorrichtung (12) in einer Slave-Betriebsart arbeitet,
**dadurch gekennzeichnet, dass** es außerdem die folgenden Operationen umfasst:
Aufbauen eines zweiten seriellen Kommunikationskanals (32) zwischen der ersten Host-Vorrichtung (11) und der zweiten Peripherievorrichtung (21), um Steuersignale (CNTRL) auszutauschen, die USB-Zugriffsoperationen des Massenspeichervorrichtungstyps auf den ersten USB-Kommunikationskanal (31) steuern können.

9. Verfahren nach Anspruch 8, **gekennzeichnet durch** das Aufbauen eines zweiten seriellen Kommunikationskanals (32) des CAN-Typs (Controller Area Network-Typ).

10. Verfahren nach Anspruch 8, **gekennzeichnet durch** das Aufbauen eines zweiten seriellen Bluetooth-Kommunikationskanals (32).

11. Verfahren nach Anspruch 8, 9 oder 10, **dadurch gekennzeichnet, dass** die Operation des Austausches von Steuersignalen (CNTRL), die USB-Zugriffsoperationen des Massenspeichervorrichtungstyps auf den ersten USB-Kommunikationskanal (31) steuern können, das Übertragen des Managements und der Initialisierung der Zugriffsoperationen auf den ersten USB-Kommunikationskanal (31) an die erste Host-Vorrichtung (11) oder an die zweite Peripherievorrichtung (21) durch Senden von Steuersignalen (105; 210) auf dem zweiten seriellen Kommunikationskanal (32) enthält.

12. Verfahren nach einem der Ansprüche 8 bis 11, **dadurch gekennzeichnet, dass** es das Übertragen des Managements und der Initialisierung der Zugriffsoperationen an die zweite Peripherievorrichtung (21) für die Steuerung der USB-(UD)-Datenübertragung mittels der folgenden Schritte umfasst:
Steuern (105) einer Operation des Lesens des Massenspeichers (23) der zweiten Peripherievorrichtung (21) durch Senden eines Steuersignals (CNTRL) von der zweiten Peripherievorrichtung (21) zu der ersten Host-Vorrichtung (11) auf dem zweiten seriellen Kommunikationskanal (32), wodurch die Verfügbarkeit eines Speicherbereichs (x, addr) in der zweiten Peripherievorrichtung (21) für das Lesen gemeldet wird;
Ausführen einer Operation des Lesens des Speicherbereichs und Übertragen der (UD)-Daten durch den ersten USB-Kommunikationskanal (31) mittels der ersten Host-Vorrichtung (11);
Bestätigen (115) des Lesens des Speicherbereichs (x, addr) durch die erste Host-Vorrichtung (11) auf dem zweiten Kommunikationskanal (32).

13. Verfahren nach einem der Ansprüche 8 bis 11, **dadurch gekennzeichnet, dass** es das Übertragen des Managements und der Initialisierung von Zugriffsoperationen an die erste Host-Vorrichtung (11) für die Übertragungssteuerung mittels der folgenden Schritte umfasst:
Befehlen (205) einer Operation des Schreibens in einem Speicherbereich (X, ADDR) in der zweiten Vorrichtung (21) durch die erste Vorrichtung (11) in der zweiten Peripherievorrichtung (21) durch Melden (210) der Verfügbarkeit des Speicherbereichs (X, ADDR) durch die erste Hostvorrichtung (11) auf dem zweiten Kommunikationskanal (32) zu der zweiten Peripherievorrichtung (21) durch Senden eines Steuersignals (CNTRL);
Lesen (215) des Speicherbereichs (X, ADDR) auf dem ersten Kommunikationskanal (31) durch die zweite Peripherievorrichtung (21) und Speichern in der zweiten Peripherievorrichtung,
Melden (220) durch Senden eines Steuersignals (CNTRL) zu der ersten Vorrichtung (11) durch die zweite Vorrichtung (21) auf dem zweiten Kommunikationskanal (32).

14. Verfahren nach einem der Ansprüche 8 bis 13, **dadurch gekennzeichnet, dass** es das Vorsehen der in einem Kraftfahrzeug installierten ersten Host-Vorrichtung (11) und das Konfigurieren der zweiten Peripherievorrichtung (21) als eine Plug-in-Vorrichtung, die eine USB-Schnittstelle (22) und eine serielle Schnittstelle (25) enthält, umfasst.

## Revendications

1. Système de communication employant un canal de communication de type USB (31) entre au moins un premier dispositif hôte (11) et un deuxième dispositif périphérique de type dispositif de stockage de masse (21), ledit premier dispositif hôte (11) comprenant une interface USB (12) fonctionnant en mode maître et ledit deuxième dispositif périphérique (21) comprenant une interface USB (22) fonctionnant en mode esclave,
ledit premier dispositif hôte (11) et ledit deuxième dispositif périphérique (21) comprenant des deuxièmes interfaces série respectives (15, 25) aptes à interagir mutuellement pour établir entre ledit premier dispositif hôte (11) et ledit deuxième dispositif périphérique (21) un deuxième canal de communication série (32) pour échanger des signaux de commande (CNTRL), **caractérisé en ce que** lesdits signaux de commande sont aptes à commander des opérations d'accès de type dispositif de stockage de masse sur ledit premier canal de communication USB (31).

2. Système selon la revendication 1, **caractérisé en ce que** ledit premier dispositif hôte (11) comprend un module de mémoire (13) et ledit deuxième dispositif périphérique (21) comprend un module de mémoire de stockage de masse (23) et **en ce que** lesdites opérations d'accès de type dispositif de stockage de masse comprennent l'accès aux données et l'échange de données entre ledit module de mémoire (13) et ladite mémoire de stockage de masse (23).

3. Système selon la revendication 1 ou 2, **caractérisé en ce que** lesdits signaux de commande (CNTRL) aptes à commander un accès de type dispositif de stockage de masse sur le premier canal de communication USB (31) comprennent des commandes (105, 210) aptes à conférer la gestion et l'initialisation des opérations d'accès sur ledit premier canal de communication USB (31) au dit premier dispositif hôte (11) ou au dit deuxième dispositif périphérique (21).

4. Système selon la revendication 1 ou 2 ou 3, **caractérisé en ce que** lesdites deuxièmes interfaces série (15, 25) aptes à établir un deuxième canal de communication série entre le premier dispositif hôte (11) et ledit deuxième dispositif périphérique (21) sont des interfaces CAN (réseau de zone de contrôleur) et ledit deuxième canal de communication (32) est un canal de type BUS CAN.

5. Système selon la revendication 1 ou 2 ou 3, **caractérisé en ce que** lesdites deuxièmes interfaces série (31, 32) aptes à établir un deuxième canal de communication série entre le premier dispositif (11) et ledit deuxième dispositif (21) sont des interfaces Bluetooth.

6. Système selon une ou plusieurs des revendications précédentes, **caractérisé en ce que** ledit premier dispositif hôte (11) est placé sur un véhicule automobile.

7. Système selon la revendication 6, **caractérisé en ce que** ladite interface série (15) dudit premier dispositif hôte (11) est une interface CAN pour communiquer avec d'autres dispositifs dudit véhicule automobile.

8. Procédé de communication comprenant l'ouverture d'un premier canal de communication USB (31) entre un premier dispositif hôte (11) et un deuxième dispositif périphérique (12) pour des opérations d'accès USB de type dispositif de stockage de masse, ledit premier dispositif hôte (11) fonctionnant en mode maître par rapport au dit premier canal de communication USB (31) et ledit deuxième dispositif périphérique (12) fonctionnant en mode esclave,
**caractérisé en ce qu'**il comprend également les opérations de;
établissement d'un deuxième canal de communication série (32) entre ledit premier dispositif hôte (11) et ledit deuxième dispositif périphérique (21) pour échanger des signaux de commande (CNTRL) aptes à commander lesdites opérations d'accès USB de type dispositif de stockage de masse sur ledit premier canal de communication USB (31).

9. Procédé selon la revendication 8, **caractérisé par** l'établissement d'un deuxième canal de communication série (32) de type CAN (réseau de zone de contrôleur).

10. Procédé selon la revendication 8, **caractérisé par** rétablissement zut deuxième canal de communication série (32) Bluetooth.

11. Procédé selon la revendication 8 ou 9 ou 10, **caractérisé en ce que** ladite opération d'échange des signaux de commande (CNTRL) apte à commander des opérations d'accès USB de type dispositif de stockage de masse sur le premier canal due communication USB (31) comprend l'opération consistant à conférer la gestion et des opérations d'accès sur ledit premier canal de communication USB (31) au dit premier dispositif hôte (11) ou au dit deuxième dispositif périphérique (21) en envoyant des commandes de contrôle (105; 210) sur ledit deuxième canal de communication série (32),

12. Procédé selon l'une quelconque des revendications 8 à 11, **caractérisé en ce qu'**il comprend l'opération consistant à conférer la gestion et l'initialisation des opérations d'accès au deuxième dispositif périphérique (21) pour le contrôle du transfert de données USB (UD), par le biais des étapes consistant à:
commander (105) une opération de lecture du stockage de masse (23) dudit deuxième dispositif périphérique (21) en envoyant un signal de commande (CNTRL) du deuxième dispositif périphérique (21) au premier dispositif hôte (11) sur le deuxième canal de communication série (32), signalant la disponibilité pour la lecture d'une zone de mémoire (x, addr) dans le deuxième dispositif périphérique (21);
effectuer par ledit premier dispositif hôte (11) une opération de lecture de ladite zone de mémoire, en transférant les données (UD) à travers le premier canal de communication USB (31);
confirmer (115) par ledit premier dispositif hôte (11) sur le deuxième canal de communication (32) la lecture de ladite zone de mémoire (x, addr).

13. Procédé selon l'une quelconque des revendications 8 à 11, **caractérisé en ce qu'**il comprend l'opération consistant à conférer la gestion et l'initialisation des opérations d'accès sur le premier dispositif hôte (11) pour le contrôle de transfert, par le biais des étapes de:
commande (205) d'une opération d'écriture par le premier dispositif (11) sur le deuxième dispositif périphérique (21) d'une zone de mémoire (X, ADDR) dans le deuxième dispositif (21) par signalement (210) sur le deuxième canal de communication (32) par le premier dispositif hôte (11) au deuxième dispositif périphérique (21) de la disponibilité de ladite zone de mémoire (X, ADDR) par l'envoi d'un signal de commande (CNTRL);
lecture (215) sur ledit premier canal de communication (31) par ledit deuxième dispositif périphérique (21) de ladite zone de mémoire (X, ADDR) et stockage dans le dit deuxième dispositif périphérique (21);
signalement (220) par le biais de l'envoi par le deuxième dispositif (21) au premier dispositif (11) d'un signal de commande (CNTRL) sur le deuxième canal de communication (32).

14. Procédé selon l'une quelconque des revendications 8 à 13, **caractérisé en ce qu'**il comprend la fourniture dudit premier dispositif hôte (11) installé dans un véhicule automobile et la configuration dudit deuxième dispositif périphérique (21) en tant que dispositif plug-in comprenant une interface USB (22) et une interface série (25).
